# EUROPEAN PATENT SPECIFICATION

(11) **EP 2 679 935 B1**
(45) Date of publication and mention of the grant of the patent: **28.08.2019**
(21) Application number: 13171335.6
(22) Date of filing: 11.06.2013
(51) Int. Cl.: F25B 41/06, F25B 49/00

(54) **CONTROL DEVICE FOR CONTROLLING AN ELECTRICALLY OPERATED VALVE**
STEUERUNGSVORRICHTUNG ZUM STEUERN EINES ELEKTRISCH BETÄTIGTEN VENTILS
DISPOSITIF DE COMMANDE POUR COMMANDER UNE VANNE ÉLECTRIQUE

(30) Priority: 26.06.2012 JP 2012142858
(43) Date of publication of application: 01.01.2014
(73) Proprietor: Fujikoki Corporation, Tokyo 158-0082 (JP)
(72) Inventor: Ogawa, Yoshio, Setagaya-ku, Tokyo 158-0082 (JP)
(74) Representative: Schweiger, Martin

(56) References cited:
- US-A- 5 263 333
- US-A- 5 726 911
- US-A1- 2006 273 272
- US-A1- 2011 023 513

## Description

### BACKGROUND OF THE INVENTION

### Field of the Invention

The present invention relates to a control device for controlling a valve opening degree of an electrically operated valve which regulates a flow rate of a refrigerant.

### Description of the Conventional Art

Document US 5,263,333 discloses a control device for controlling an electrically operated valve having an inflow port and an outflow port of a fluid, a valve body which controls a flow rate of the fluid flowing out of said outflow port, and a motor which drives said valve body. This control device comprises: a valve opening degree control means which controls a valve opening degree of the electrically operated valve, an initializing control means which executes an initializing process and a memory means. Conventionally, in a refrigeration cycle which is used in an air conditioner, refrigerating and freezing show cases, a flow rate adjustment of a circulating refrigerant is carried out for the purpose of stabilizing a cooling capacity and efficiently drive by making a degree of superheat constant, however, in order to carry out the adjustment at this time at a high precision, an electrically operated valve is widely made good use as an expansion valve for controlling the flow rate, the electrically operated valve serving as an electrically operated type expansion valve which actuates a valve body by a stepping motor.

However, in the electrically operated valve, it is general to carry out a control of an opening degree by using an open loop control which does not feed back an absolute opening degree (an actual opening degree), and a valve body within the electrically operated valve stops at a position at a time of shutting off a power supply without turning back to an initial position in the case that the power supply is stopped. Accordingly, there is a problem that the position (the absolute opening degree) where the valve body stops can not be accurately comprehended in the case that the power is turned on next.

Accordingly, in the control of the electrically operated valve, generally, an initializing process is executed at a time of turning on the power, and the control of the opening degree is started after positioning the valve body (refer, for example, to Japanese Unexamined Patent Publication No. 2010-169329). Here, the initializing process means a process of driving so as to close the electrically operated valve only at a pulse number which goes beyond all the strokes from a full open position to a full close position, for example, sufficiently turning a stepping motor in a valve closing direction until a rotor of the stepping motor securely comes into collision with a rotation stop called as a stopper so as to stop turning. Accordingly, the electrically operated valve detects an initial position at 0 pulse.

### SUMMARY OF THE INVENTION

### Problem to be Solved by the Invention

However, since a frequency of the collision of the rotor of the stepping motor with the stopper is increased, as well as an increase of an executing frequency of the initializing process, a durability of the electrically operated valve comes to a problem. Accordingly, the executing frequency of the initializing process generally has a limit, for example, fifty thousand times.

In the case that the electrically operated valve is used as an expansion valve of a refrigeration cycle in a room air conditioner, the initializing process is carried out periodically only once a week for the purpose of correcting a displacement of the electrically operated valve, in addition to the time of turning on the power when a stop position of the valve body is unknown. Since the executing frequency of the initializing process is low, the initializing process does not come to a problem so much in this case.

However, in the case that the electrically operated valve is used as an expansion valve of a refrigeration cycle in a car air conditioner, the initializing process may be carried out, for example, once a traveling cycle (one ON-OFF operation of a key). Since the executing frequency of the initializing process is widely increased in comparison with the case of the room air conditioner, a durability of the electrically operated valve has come to a problem.

Accordingly, the present invention is made by taking into consideration the problem in the prior art, and the object of the present invention is to provide a control device for controlling an electrically operated valve which prevent a failure of an electrically operated valve caused by an executing frequency of an initializing process and have a high reliability.

### Means for Solving the Problem

In order to achieve the object mentioned above, the present invention provides a control device for controlling an electrically operated valve having an inflow port and an outflow port of a fluid, a valve body which controls a flow rate of the fluid flowing out of the outflow port, and a stepping motor which drives the valve body, the control device comprising a valve opening degree control means which controls a valve opening degree of the electrically operated valve, an initializing control means which executes an initializing process of initializing a turning position of said stepping motor of the electrically operated valve such that a rotor of said stepping motor is moved to a position where said rotor comes into collision with a stopper, and a memory means wherein the memory means stores frequency of executing the initializing process, the executing frequency being counted by an initializing frequency counter from an initial value set to zero and a microcomputer adds one to the counter, wherein the executing frequency provides an indication of a durability of the electrically operated valve.

Further, according to the present invention, since the executing frequency of the initializing process is stored in the memory means, the electrically operated valve itself can comprehend the executing frequency of the initializing process which affects a durability of the electrically operated valve, it is possible to prevent a failure of the electrically operated valve caused by the executing frequency of the initializing process, and it is possible to provide the electrically operated valve control device having a high reliability.

The electrically operated valve control device can be further provided with a communicating means which carries out transmission and receipt of signals, and the communicating means can output the executing frequency of the initializing process which is stored in the memory means. Accordingly, it is possible to comprehend the executing frequency of the initializing process which affects the durability of the electrically operated valve in an external equipment.

In the electrically operated valve control device, the communicating means can carry out the transmission and receipt according to a local interconnect network (LIN) communication or a controller area network (CAN) communication. By using the LIN communication or the CAN communication which is widely used for a motor vehicle, the control device for controlling an electrically operated valve according to the present invention can be applied to the expansion valve of the refrigeration cycle in the car air conditioner.

In the electrically operated valve control device, an alarm signal can be output in the case that the executing frequency of the initializing process goes beyond a predetermined frequency. Accordingly, it is possible to inform the external equipment of a replacing timing of the electrically operated valve.

In the electrically operated valve control device, the motor of the electrically operated valve is a stepping motor, and the initializing control means initializes a turning position of the stepping motor.

In the electrically operated valve control device, the electrically operated valve can be set to an expansion valve which is used in a refrigeration cycle device.

Further, according to an embodiment of the present invention, there is provided an electrically operated valve device comprising the electrically operated valve control device as recited in any one of the above structures, and an electrically operated valve to which the electrically operated valve control device is integrally attached.

Since the electrically operated valve control device is integrally attached to the electrically operated valve, it is possible to downsize these elements, and an installation into a narrow vehicle can be effectively carried out.

### Effect of the Invention

As mentioned above, according to the present invention, the control device for controlling the electrically operated valve can prevent a failure of the electrically operated valve caused by the executing frequency of the initializing process, and has a high reliability.

### BRIEF EXPLANATION OF THE DRAWINGS

Fig. 1 is a block diagram of a system in which a control device for controlling an electrically operated valve according to the present invention are applied to an expansion valve of a refrigeration cycle system which is used in a car air conditioner;
Fig. 2 is a flow chart showing a process flow of a microcomputer at a time when the electrically operated valve control device in Fig. 1 carries out an initializing process; and
Fig. 3 is a view showing an example of a transmission buffer register in a LIN communication of the electrically operated valve control device according to an embodiment of the present invention.

### DETAILED DESCRIPTION OF PREFERRED EMBODIMENT

Next, a description will be given in detail of an embodiment for executing the present invention with reference to the accompanying drawings. In the following description, a description will be given by exemplifying a case that a control device for controlling an electrically operated valve according to the present invention are applied to an expansion valve of a refrigeration cycle system which is used in a car air conditioner.

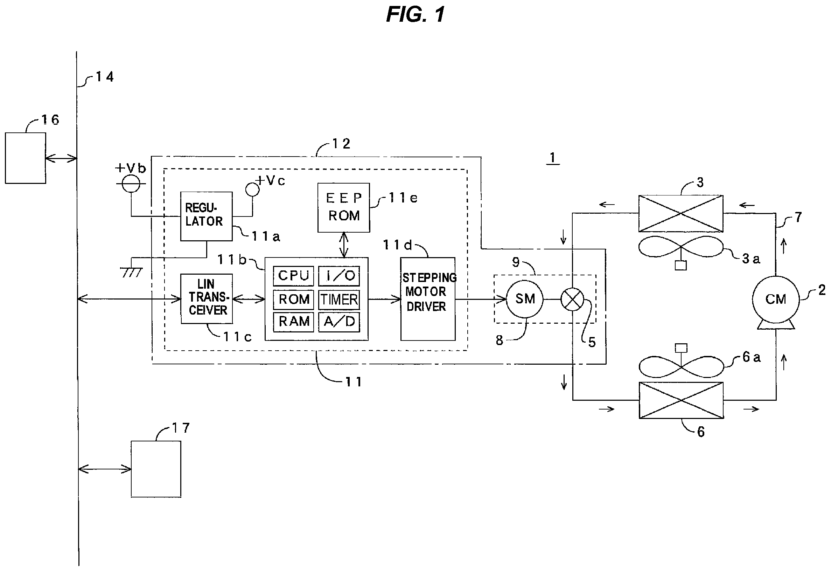

Fig. 1 shows a refrigeration cycle system which is provided with the electrically operated valve control device according to the present invention, and the system 1 is provided with a compressor 2, a condenser 3, a fan 3a for the condenser, an expansion valve 5, an evaporator 6, and a fan 6a for the evaporator.

The compressor 2, the condenser 3, the expansion valve 5 and the evaporator 6 are connected by a piping 7, and a refrigerant circulates between them in a direction of an arrow. Here, a flow rate of the refrigerant flowing through the piping 7 is controlled by adjusting a valve opening degree of the expansion valve 5.

The compressor 2 compresses a refrigerant in a state of a gas which is supplied from the evaporator 6 and has a low pressure, and converts the refrigerant into a high-pressure gas so as to supply to the condenser 3 via the piping 7.

The condenser 3 condenses the refrigerant in the high-pressure gas state which is supplied from the compressor 2, converts the refrigerant into a refrigerant in a high-pressure liquid state so as to absorb a condensing heat, and discharges the absorbed heat to an external portion by an air blasting of the fan 3a for the condenser.

The expansion valve 5 is provided for changing the refrigerant in the high-pressure liquid state supplied from the condenser 3 to a low-pressure state. The expansion valve 5 is provided with an inflow port and an outflow port for the refrigerant, and a valve body which controls a flow rate of the refrigerant flowing out of the outflow port, an illustration of which is omitted. An electrically operated valve 9 is constructed by the expansion valve 5, and a stepping motor 8 which drives the valve body of the expansion valve 5. A valve opening degree of the expansion valve 5 is adjusted by a rotation of the stepping motor 8. An electrically operated valve control device 11 is integrally attached to the electrically operated valve 9, thereby constructing an electrically operated valve device 12.

The evaporator 6 is provided for evaporating (vaporizing) the refrigerant in a low-pressure liquid state from the expansion valve 5. In the evaporator 6, the refrigerant absorbs heat of vaporization from a surrounding area and is heated. The surrounding area is cooled by the absorbed heat, and the cooled air is discharged by the air blasting of the fan 6a for the evaporator.

To the electrically operated valve control device 11, there is connected a battery power supply (+Vb, GND) of a vehicle, and there is also connected an in-vehicle LAN used for communication within a vehicle, for example, a LIN bus (or a CAN bus) 14. The electrically operated valve control device 11 operates as a slave node, receives a command such as a pulse number and an initializing signal of the stepping motor 8 on the basis of a LIN communication signal (a CAN communication signal in the case of a CAN bus) transmitted from an air conditioner ECU 16 serving as a master node connected to the LIN bus 14, and controls an opening degree of the electrically operated valve 9 (the expansion valve 5).

To the LIN bus 14, there is additionally connected a damper device 17 serving as a slave node used for controlling the car air conditioner,

The electrically operated valve control device 11 is constructed by a regulator 11a which generates a power supply + Vc (for example, +5 Vdc) which is used in a circuit in an internal portion of the electrically operated valve control device 11, from a battery power supply + Vb (for example, +12 Vdc), a microcomputer 11b provided with a ROM which stores a program for controlling a rotation of the stepping motor 8 on the basis of the LIN communication signal transmitted from the air conditioner ECU 16 through the LIN bus 14, a CPU which carried out an execution of the program stored in the ROM and a computing operation, a RAM which temporarily stores data which is necessary for executing the program, for example, an executing frequency of an initializing process and communication data, an I/O circuit which carries out an input and output in relation to a peripheral circuit, a timer which measures a time for an interrupting process, and an A/D converter which converts an analogue voltage into a digital value, a LIN transceiver (a communicating means) 11c which is connected to the LIN bus 14, converts a voltage level of the LIN bus 14 into a circuit voltage level in an internal portion of the electrically operated valve control device 11, and allows a LIN communication with the microcomputer 11b, a stepping motor driver 11d which controls the rotation of the stepping motor 8 of the electrically operated valve 9 on the basis of a driving signal from the microcomputer 11b, and an EEPROM (a memory means) 11e which is connected to the microcomputer 11b, stores the data, for example, the executing frequency of the initializing process which is necessary to be held even if the battery power supply is disconnected, among the RAM data of the microcomputer 11b, and serves as a nonvolatile memory. Both of the valve opening degree control means and the initializing control means are constructed by the microcomputer 11b and the stepping motor driver 11d. It is possible to employ an IC obtained by integrally constructing two or more of the regulator 11a, the LIN transceiver 11c, the stepping motor driver 11d, the EEPROM 11e, and the microcomputer 11b. In this case, a further downsizing of the device can be achieved.

In Fig. 1, the air conditioner ECU 16 computes a target opening degree (a pulse number) of the electrically operated valve 9 on the basis of a temperature and a pressure which are measured by a temperature sensor (not shown) and a pressure sensor (not shown), so that a degree of superheat of the refrigeration cycle system 1 comes to a constant set value, and transmits the computed target opening degree to the electrically operated valve control device 11 through the LIN bus 14 according to a LIN communication signal.

The electrically operated valve control device 11 receives the signal by the LIN transceiver 11c, and converts the signal into a voltage level of the internal circuit of the electrically operated valve control device 11 so as to output to the microcomputer 11b. The microcomputer 11b inputs the signal, and outputs a drive signal for setting the stepping motor 8 of the electrically operated valve 9 to a target opening degree (pulse number) to the stepping motor driver 11d. The stepping motor driver 11d turns the stepping motor 8 of the electrically operated valve 9 on the basis of the input signal, and controls the valve opening degree of the electrically operated valve 9 to the target opening degree, thereby controlling so that the degree of superheat of the refrigeration cycle system 1 comes to the constant set value.

Further, since it is necessary to detect an initial position of the electrically operated valve 9 after turning on the battery power of the electrically operated valve control device 11, the air conditioner ECU 16 transmits the command for executing the initializing process to the electrically operated valve control device 11 via the LIN bus 14 according to the LIN communication signal. The electrically operated valve control device 11 receiving the signal carries out an initializing (0 pulse positioning) of the valve opening degree, for example, by turning the stepping motor 8 in a valve closing direction, for example, at 700 pulses, for turning the stepping motor 8 until the rotor of the expansion valve 5 comes into collision with the stopper. Here, since a current position (a pulse number) of the stepping motor 8 is not known at a time of turning on the battery power, there is set 700 pulses obtained by adding a pulse number (for example, 200 pulses) which is sufficient for securing making the rotor come into collision with the stopper, to the maximum pulse number (for example, 500 pulses) which the electrically operated valve 9 can control. Further, the executing frequency of the initializing process is counted by the microcomputer 11b, and is stored in the EEPROM 11e.

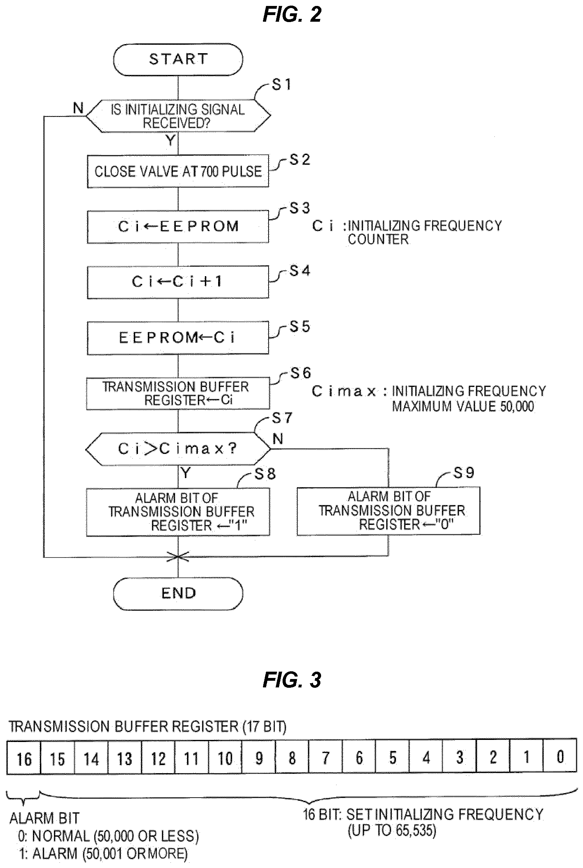

Next, a description will be given of a process flow of the microcomputer 11b in the case that the electrically operated valve control device 11 carries out the initializing process, with reference to Fig. 2. The process is executed, for example, per a fixed time.

First of all, when the microcomputer 11b receives the initializing signal from the air conditioner ECU 16 (step S1: Yes), the microcomputer 11b turns the stepping motor 8 in the valve closing direction, for example, 700 pulses (step S2).

Next, the microcomputer 11b reads an initializing frequency counter Ci stored in the EEPROM 11e onto the RAM of the microcomputer 11b (step S3). Here, an initial value of Ci is set to 0, and in a case not forming part of the invention that no initializing process is carried out, Ci = 0 is established.

Here, when the microcomputer 11b executes one initializing process, the microcomputer 11b adds 1 to Ci on the RAM (step S4), and again writes Ci on the RAM to the EEPROM 11e so as to store (step S5). Accordingly, the electrically operated valve control device 11 stores the executing frequency of the initializing process which affects the durability, and can always check. Further, by storing in the EEPROM 11e which is a nonvolatile memory, it is possible to always store the executing frequency of the initializing process even in the case that the microcomputer 11b gets into a sleep mode for setting the electrically operated valve control device 11 to a power saving state, and the microcomputer 11b does not operate due to disconnection of Vc or the battery power supply is disconnected.

Next, the microcomputer 11b sets Ci existing on the RAM in the transmission buffer register of the LIN communication existing on the same RAM, for transmitting the executing frequency of the initializing process which is counted in the air conditioner ECU 16 (step S6). In the case that the microcomputer 11b receives the transmission request signal according to the LIN communication from the air conditioner ECU 16 via the LIN bus 14, the microcomputer 11b transmits the contents of the transmission buffer register as the LIN communication signal to the air conditioner ECU 16 through the LIN bus 14. Accordingly, the air conditioner ECU 16 which is the external master node can comprehend the executing frequency of the initializing process of the electrically operated valve 9, it is possible to confirm the executing frequency of the initializing process from the external portion of the vehicle at a servicing time, for example, an inspecting time, and it is possible to determine whether or not the electrically operated valve 9 should be replaced, early before the executing frequency of the initializing process goes beyond the maximum value.

Next, the microcomputer 11b compares Ci on the RAM with an initializing frequency maximum value Cimax on the ROM (step S7), and in the case that Ci goes beyond Cimax (step S7: Yes), the microcomputer 11b determines that the executing frequency of the initializing process goes beyond a durably allowable maximum value, and sets an alarm bit of the transmission buffer register to "1" (step S8). In the case that the microcomputer 11b receives the transmission request signal according to the LIN communication from the air conditioner ECU 16 via the LIN bus 14, the microcomputer 11b transmits the contents of the transmission buffer register as the LIN communication signal to the air conditioner ECU 16 through the LIN bus 14. Accordingly, the air conditioner ECU 16 which is the external master node can comprehend that the executing frequency of the initializing process of the electrically operated valve 9 goes beyond the maximum value, and can call a driver's attention, for example, by turning on a lamp in the vehicle, and it is possible to replace the electrically operated valve 9 in which the executing frequency of the initializing process goes beyond the durably limit value with a new one. Further, if Ci does not go beyond Cimax at this time (step S7: No), the electrically operated valve 9 is in a normal state, and the alarm bit of the transmission buffer register is cleared up to "0" (step S9).

Further, in the case that no initializing signal is received from the air conditioner ECU 16 (step S1: No), the process is finished with doing nothing.

Fig. 3 shows an example of the transmission buffer register in the LIN communication of the electrically operated valve control device 11. For example, in the case that a regulation of the limit frequency of the initializing process of the electrically operated valve 9 is 50,000 times, the transmission can be carried out up to 65,535 times by setting the register which sets the executing frequency of the initializing process to 16 bit. Further, on the assumption that the alarm bit is set to 1 bit, and Cimax is set to 50,000, "0" indicating a normal state is set in the case that the executing frequency of the initializing process is equal to or less than 50,000 times, and "1" indicating an alarm state is set in the case that the executing frequency of the initializing process is equal to or more than 50,001 times. According to this structure, the transmission buffer register is deemed to be constructed by 17 bit.

In the embodiment mentioned above, there is exemplified the case that the electrically operated valve control device 11 and the electrically operated valve device 12 are applied to the expansion valve 5 (the electrically operated valve 9) of the refrigeration cycle system which is used in the car air conditioner, however, the electrically operated valve control device 11 and the electrically operated valve device 12 can be applied to an electrically operated valve, as long as the electrically operated valve is provided with an inflow port and an outflow port for a fluid, a valve body which controls a flow rate of the fluid flowing out of the outflow port, and a motor which drives the valve body, without being limited to the expansion valve 5.

## Claims

1. A control device (11) for controlling an electrically operated valve (9), said valve (9) having an inflow port and an outflow port of a fluid, a valve body which controls a flow rate of the fluid flowing out of said outflow port, and a stepping motor (8) which drives said valve body, the control device (11) comprising:
a valve opening degree control means (11b, 11d) which controls a valve opening degree of said electrically operated valve (9);
an initializing control means (11b, 11d) which executes an initializing process of initializing a turning position of said stepping motor (8) of said electrically operated valve (9) such that a rotor of said stepping motor (8) is moved to a position where said rotor comes into collision with a stopper; and
a memory means (11e);
wherein said memory means (11 e) stores a frequency of executing the initializing process, the executing frequency being counted by an initializing frequency counter (Ci) from an initial value set to zero and a microcomputer (11b) adds one to the counter, wherein the executing frequency provides an indication of a durability of the electrically operated valve (9).

2. The electrically operated valve control device (11) according to claim 1, further comprising a communicating means (11c) which carries out transmission and receipt of signals,
wherein said communicating means (11c) outputs the executing frequency of the initializing process which is stored in said memory means.

3. The electrically operated valve control device according to claim 2, wherein said communicating means carries out the transmission and receipt according to a local interconnect network (LIN) communication or a controller area network (CAN) communication.

4. The electrically operated valve control device according to claim 1, 2 or 3, wherein an alarm signal is output in the case that the executing frequency of the initializing process goes beyond a predetermined frequency.

5. The electrically operated valve control device according to any one of claims 1 to 4, wherein said electrically operated valve is an expansion valve which is used in a refrigeration cycle device.

6. An electrically operated valve device comprising:
the electrically operated valve control device according to any one of claims 1 to 5; and
an electrically operated valve to which said electrically operated valve control device is integrally attached.

## Patentansprüche

1. Ein Steuergerät (11) zum Steuern eines elektrisch betätigten Ventils (9), wobei das Ventil (9) ein Einströmöffnung und eine Ausströmöffnung eines Fluids, einen Ventilkörper, der eine Flussrate des aus der Ausströmöffnung ausströmenden Fluids kontrolliert, und einen Schrittmotor (8) aufweist, der den Ventilkörper antreibt, wobei das Steuergerät Folgendes aufweist:
eine Ventilöffnungsgrad-Steuervorrichtung (11b, 11d), die einen Ventilöffnungsgrad des elektrisch betätigten Ventils (9) steuert;
eine Initialisierungs-Steuervorrichtung (11b, 11d), die einen Initialisierungsvorgang des Initialisierens einer Drehstellung des Schrittmotors (8) des elektrisch betätigten Ventils (9) ausführt, dergestalt, dass ein Rotor des Schrittmotors (8) zu einer Position bewegt wird, in der der Rotor mit einem Stopper kollidiert; und
eine Speichervorrichtung (11e);
wobei die Speichervorrichtung (11e) eine Ausführungshäufigkeit des Initialisierungsvorgangs speichert, wobei die Ausführungshäufigkeit durch einen Ausführungshäufigkeitszähler (Ci) gezählt wird, und zwar von einem Anfangswert, der auf Null gesetzt ist, wobei ein Mikrocomputer (11b) Eins zu dem Zähler hinzuzählt, und wobei die Ausführungshäufigkeit ein Anzeichen für eine Lebensdauer des elektrisch betätigten Ventils bereitstellt.

2. Das Steuergerät (11) zum Steuern eines elektrisch betätigten Ventils (9) gemäß Anspruch 1,
das weiterhin eine Kommunikationsvorrichtung (11c) aufweist, die ein Übertragen und Empfangen von Signalen ausführt, wobei die Kommunikationsvorrichtung (11c) die Ausführungshäufigkeit des Initialisierungsvorgangs ausgibt, die in der Speichervorrichtung gespeichert ist.

3. Das elektrisch betätigte Ventilsteuergerät gemäß Anspruch 2, wobei
die Kommunikationsvorrichtung die Übertragung und den Empfang gemäß einer Local Interconnect Network (LIN)-Kommunikation oder gemäß einer Controller Area Network (CAN)-Kommunikation ausführt.

4. Das elektrisch betätigte Ventilsteuergerät gemäß Anspruch 1, 2 oder 3,
wobei ein Alarmsignal in dem Fall ausgegeben wird, dass die Ausführungshäufigkeit des Initialisierungsvorgangs eine vorgegebene Ausführungshäufigkeit überschreitet.

5. Das elektrisch betätigte Ventilsteuergerät gemäß einem der Ansprüche 1 bis 4, wobei das elektrische betätigte Ventil ein Expansionsventil ist, das in einem Kältekreislauf-Gerät verwendet wird.

6. Ein elektrisch betätigtes Ventilgerät, das Folgendes aufweist:
das elektrisch betätigte Ventilsteuerungsgerät gemäß einem der Ansprüche 1 bis 5; und
ein elektrisch betätigtes Ventil, an dem das elektrisch betätigte Ventilsteuerungsgerät integral befestigt ist.

## Revendications

1. Un appareil de contrôle (11) pour contrôler une valve à actionnement électrique (9), la valve (9) comprenant un orifice d'admission et un orifice de sortie d'un fluide, un corps de valve qui contrôle un débit d'amené du fluide qui s'écoule de l'orifice de sortie, un moteur pas à pas (8) qui entraîne le corps de valve, l'appareil de contrôle comprenant :
un dispositif de commande d'un degré d'ouverture de valve (11a, 11d) qui contrôle un degré d'ouverture de la valve à actionnement électrique (9);
un dispositif de contrôle d'initialisation (11b, 11d) qui exécute un processus d'initialisation d'une position de pivotement du moteur pas à pas (8) de la valve à actionnement électrique (9) de sorte qu'un rotor du moteur pas à pas (8) est déplacé à une position dans laquelle le rotor entre en collision avec un arrêt; et
un dispositif de mémoire (11e);
dans laquelle le dispositif de mémoire (11e) stocke une fréquence d'exécution du processus d'initialisation, la fréquence d'exécution étant compté par un compteur de fréquence d'initialisation (Ci) à partir d'un valeur mis à zéro et dans laquelle un micro-ordinateur (11b) ajoute un au compteur, dans laquelle la fréquence d'exécution fournit une indication d'une durabilité de la valve à actionnement électrique (9).

2. L'appareil de contrôle à actionnement électrique (11) selon revendication 1,
comprenant en outre un dispositif de communication (11c) qui effectue une transmission et réception de signaux, dans lequel le dispositif de communication (11c) renvoie la fréquence d'exécution du processus d'initialisation, qui est stocké dans le dispositif de mémoire.

3. L'appareil de contrôle à actionnement électrique (11) selon revendication 2, dans lequel
le dispositif de communication exécute la transmission et la réception selon une communication réseau interconnecté local (LIN) ou selon une communication réseau de terrain (CAN).

4. L'appareil de contrôle à actionnement électrique (11) selon une des revendications 1, 2 ou 3, dans lequel un signal d'alarme est renvoyé dans le cas où la fréquence d'exécution du processus d'initialisation dépasse une fréquence prédéterminée.

5. L'appareil de contrôle à actionnement électrique (11) selon une quelconque des revendications 1 à 4, dans lequel la valve à actionnement électrique est une soupape de détente qui est utilisée dans un dispositif de cycle frigorifique.

6. Un appareil de valve à actionnement électrique, l'appareil comprenant :
l'appareil de contrôle à actionnement électrique selon une quelconque des revendications 1 à 5 ; et
une valve à actionnement électrique à laquelle l'appareil de valve à actionnement électrique est relié de manière intégrale.
